(19) Europäisches Patentamt
European Patent Office
Office européen des brevets

(11) **EP 1 943 540 B1**

(12) **FASCICULE DE BREVET EUROPEEN**

(45) Date de publication et mention
de la délivrance du brevet:
**16.12.2009  Bulletin 2009/51**

(21) Numéro de dépôt: **06807387.3**

(22) Date de dépôt: **18.10.2006**

(51) Int Cl.:
**G01S 13/78** (2006.01)

(86) Numéro de dépôt international:
**PCT/EP2006/067556**

(87) Numéro de publication internationale:
**WO 2007/051712 (10.05.2007 Gazette 2007/19)**

(54) **PROCEDE DE SELECTION AUTOMATIQUE DE BALISES DE RADIONAVIGATION**

**VERFAHREN ZUR AUTOMATISCHEN AUSWAHL VON FUNKNAVIGATIONSSIGNALEN**

**METHOD FOR AUTOMATICALLY SELECTING RADIO NAVIGATION BEACONS**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2005  FR 0511256**

(43) Date de publication de la demande:
**16.07.2008  Bulletin 2008/29**

(73) Titulaire: **THALES**
**92200 Neuilly sur Seine (FR)**

(72) Inventeur: **JACOTOT, Grégoire**
**26000 Valence (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 3 936 828**

- **W.B. RUHNOW AND M. L. GOEMAAT: "VOR/DME Automated Station Selection Algorithm" JOURNAL OF THE INSTIUE OF NAVIGATION, vol. 29, no. 4, février 1983 (1983-02), pages 289-299, XP002397142 USA**
- **HARGROVE A: "A Comparison Of Actual And Simulated Horizontal Flight Paths: RNAV (Area Navigation) System" SOUTHEASTCON 81, CONF.PROC., 5 avril 1981 (1981-04-05), pages 638-642, XP010277403**

**Description**

Le domaine de l'invention est celui des systèmes de navigation servant à bord d'un aéronef, à déterminer la position de l'aéronef à partir de mesures de distance séparant l'aéronef de balises de radionavigation délivrées par des équipements du type DME (acronyme anglais de Distance Measuring Equipment). II concerne plus particulièrement un procédé de sélection d'un couple de balises de radionavigation parmi une liste de balises éligibles mis en oeuvre dans un tel système de navigation.

On rappelle qu'un équipement de mesure de distance du type DME est habituellement utilisé comme aide à la navigation aérienne, tant en route que lors des approches. Un tel équipement a pour fonction de fournir, sur interrogation, la distance qui sépare un aéronef d'une station sol (appelée encore transpondeur ou balise de radionavigation) dont la position est connue.

Le fonctionnement d'un tel équipement est le suivant : l'aéronef porte un interrogateur qui interroge la station au sol. Le message d'interrogation est constitué par une paire d'impulsions VHF dont l'espacement et la fréquence porteuse sont définis par l'OACI (Organisation de l'Aviation Civile Internationale), fonction du type DME et de sa localisation et connus du transpondeur. Lorsque le transpondeur reçoit et reconnaît ces impulsions, il émet une réponse à destination de l'aéronef. La réponse se présente également sous la forme d'une paire d'impulsions d'espacement et de fréquence porteuse définis, émise avec un retard également défini, le tout étant fixé par les normes de l'OACI et donc connu de l'interrogateur. Lorsque l'interrogateur de l'aéronef reçoit et reconnaît cette réponse il déduit la distance qui le sépare du transpondeur de la durée du trajet aller-retour des impulsions.

La surface terrestre du globe est maillée par un réseau de balises, plus ou moins dense. La position de ces balises est connue et stockée dans une base de données qui est embarquée sur l'aéronef. A chaque instant, seul un petit nombre de ces balises est accessible à l'aéronéf pour lui fournir une mesure de distance, on parle de balises éligibles.

On sait que la mesure de l'altitude de l'aéronef par un équipement de mesure de distance du type DME est peu précise en raison de la position au sol des balises, c'est la raison pour laquelle la mesure d'altitude de l'aéronef est réalisée, en général, par un autre moyen comme par exemple, une sonde anémo-barométrique. Dans ce cas, la localisation de l'aéronef par l'équipement de mesure de distance du type DME se résume, lorsque les mesures sont réalisées avec une précision infiniment grande, à un problème à deux dimensions que l'on peut résoudre grâce à des mesures de distance séparant l'aéronef de deux balises.

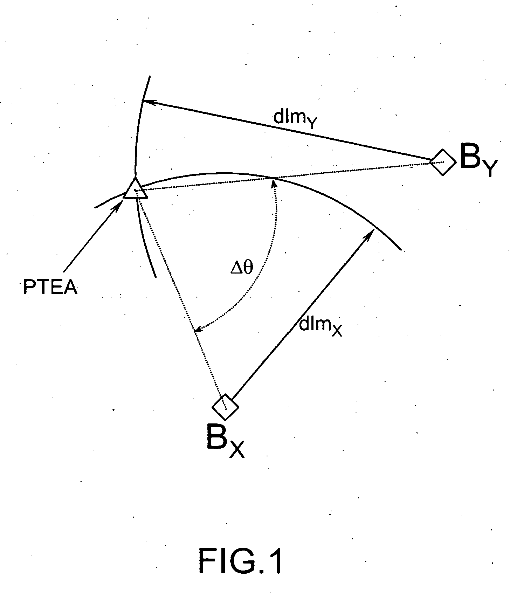

On représente sur la figure 1, le principe de la localisation de l'aéronef sur la surface terrestre, en faisant l'hypothèse d'un monde en deux dimensions : une mesure de la distance séparant l'aéronef d'une première balise ($B_X$) projetée sur la surface terrestre vaut $dlm_X$, et une mesure de la distance séparant l'aéronef d'une deuxième balise ($B_Y$) projetée sur le sol vaut $dlm_Y$. L'intersection du cercle de rayon $dlm_X$ centré sur la position de la balise $B_X$ et du cercle de rayon $dlm_Y$ centré sur la position de la balise $B_Y$ fournit une estimation de la position terrestre 2D de l'aéronef PTEA.

Dans la suite, la position terrestre 2D d'un objet ou d'un point est définie comme la localisation de l'objet ou du point dans un repère terrestre, qui n'est pas forcément plan, lorsque on considère que son altitude est nulle. La position terrestre 2D peut par exemple être exprimée sous forme d'une valeur de longitude et d'une valeur de latitude.

En réalité, la précision d'une mesure de distance délivrée par une balise n'est pas infinie. On peut montrer que, dans le cas où N mesures de distances de précision identique (avec N supérieur ou égal à deux) sont réalisées simultanément en employant N balises, la précision de l'estimation de la position terrestre 2D de l'aéronef croît avec le nombre de balises employées (N), lorsque les balises sont positionnées de façon optimale. Les positions optimales des balises correspondent à des dispositions où les angles entre les géodésiques liant la position terrestre 2D de l'aéronef et les positions terrestres 2D des N balises utilisées sont proches de $\pi/N$ radian. Mais, la durée nécessaire pour choisir une configuration optimale comportant un nombre de balises (supérieur ou égal à deux et non fixé a priori) parmi un nombre de balises éligibles qui peut dépasser la quarantaine est rédhibitoire. On préfère donc se limiter à rechercher un couple de balises, disposées de façon optimale, dans une liste des balises éligibles.

Dans l'état de la technique, l'estimation de la position terrestre 2D de l'aéronef à un instant $t_2$ met en oeuvre un procédé de sélection d'un couple de balises qui recherche, à partir de la connaissance de la position terrestre 2D de l'aéronef à un instant $t_1$ antérieur à $t_2$ et des informations de position des balises, contenues dans la base de données, le couple de balises dont les mesures de distances qui les séparent de l'aéronef sont susceptibles de produire une estimation de la position terrestre 2D de l'aéronef la plus précise à cet instant. Les balises composant le couple sont celles qui ont une position terrestre 2D telle que l'angle ($\Delta\theta$) formé par les géodésiques reliant la position terrestre 2D de l'aéronef aux positions terrestres 2D de chacune des balises utilisées est le plus proche de $\pi/2$ radian. Un tel procédé est décrit dans l'article Ruhnow et al. "VOR/DME Automated Station Selection Algorithm" Journal of the Institute of Navigation, Vol. 29, No. 4, Winter 1982-83.

Ce procédé a l'avantage de fournir, à tout instant, une mesure de la position terrestre 2D de l'aéronef qui est la plus précise réalisable avec deux balises. Toutefois, le critère de sélection que le procédé utilise présente l'inconvénient, lorsque le procédé de sélection est mis en oeuvre de façon répétée, de produire un changement fréquent d'une ou des balises sélectionnées, par exemple dans le cas du survol par l'aéronef d'une zone terrestre dense en balises.

Or une modification de balise requiert une durée d'initialisation, pouvant atteindre cinq secondes, qui est liée à un changement de fréquence de porteuse du message émis par l'interrogateur et cette durée d'initialisation réduit la disponibilité de l'estimation de la position terrestre 2D de l'aéronef. Par ailleurs, la modification du couple de balises sélectionnées nuit à la continuité de l'estimation de position de l'aéronef dans le temps car elle perturbe la mise en place de traitements permettant une estimation des biais des balises. Une solution de l'état de la technique consiste à réduire la fréquence de la mise en oeuvre des sélections des couples de balises en déclenchant les sélections de balises sur la base d'un critère de modification du couple de balises sélectionnées courant. Le critère de modification peut être, par exemple, la fixation d'une valeur plancher de la précision de l'estimation de position. Cette précision peut, elle même, être estimée au moyen de l'évaluation de l'angle $\Delta\theta$. Une sélection de balise est conservée tant que l'évaluation de la précision de l'estimation de la position de l'aéronef réalisée au moyen du couple de balises sélectionnées indique qu'elle a une valeur supérieure à la valeur plancher, dès que cela n'est plus le cas une nouvelle sélection de balises a lieu. Mais une telle réduction de la fréquence de la sélection des balises fondée sur la seule précision de l'estimation de position peut nécessiter de fixer une valeur de plancher de précision relativement basse et ne garantit pas le maintien dans le temps de la valeur de précision d'estimation. En particulier, même si une sélection de balises est stable sur une période de temps, on n'a pas la certitude que le couple de balises sélectionnées au démarrage de la période est celui qui fournit une estimation de position avec la meilleure précision sur toute la période.

Un but important de l'invention est donc de pallier cet inconvénient. Plus précisément, il vise à éviter des changements fréquents de balises sélectionnées en modifiant d'une part le critère considéré pour la sélection des balises, qui ne doit plus être seulement fondé sur la précision de l'estimation de position de l'aéronef à un instant donné mais également sur la capacité à conserver une sélection de balise sur une durée de vol la plus étendue possible, en introduisant d'autre part, un critère de modification de la sélection des balises. En résumé, le but poursuivi est donc de privilégier un choix de couple de balises permettant d'assurer une précision d'estimation de position donnée, sur la durée de vol de l'aéronef la plus étendue possible.

Selon l'invention, on propose un procédé de sélection de balises de radionavigation par un système de navigation embarqué à bord d'un aéronef dans une liste de balises éligibles $(B_1, ...., B_n)$ à un instant $t_2$, une position $A(t_1)$ prise par l'aéronef dans un repère lié à la Terre à un instant $t_1$ antérieur à $t_2$ étant connue, une projection de la position de l'aéronef sur le globe terrestre 2D suivant la verticale à l'aéronef étant dénommée position terrestre 2D de l'aéronef; les balises éligibles étant disposée sur la surface terrestre en des positions connues qui sont stockées dans une base de données équipant l'aéronef, un domaine d'emploi d'une balise éligible $B_i$ définissant un ensemble de positions terrestres 2D de l'aéronef correspondant à des positions de l'aéronef pour lesquelles une mesure de distance séparant l'aéronef et la balise $B_i$ est pertinente, une zone d'emploi $Z_{X,Y}(\theta, t_1)$ d'un couple de balises éligibles $(B_X, B_Y)$ étant définie par une intersection entre les domaines d'emploi des balises $B_X$ et $B_Y$ et un lieu géométrique regroupant des positions terrestres 2D de l'aéronef pour lesquelles un angle formé par des axes reliant la position terrestre 2D de l'aéronef et les positions des balises $B_X$ et $B_Y$ est supérieur à une valeur $\theta$ prédéfinie, la zone d'emploi $Z_{X,Y}(\theta, t_1)$ étant délimitée par une frontière,
caractérisé en ce qu'il comporte une étape pour élaborer un critère de sélection d'un couple de balises $(B_x, B_y)$ parmi les balises faisant partie de la liste des balises éligibles, et en ce que le critère de sélection est fondé sur une recherche d'une durée maximum d'appartenance, pour des instants ultérieurs à l'instant $t_1$, de la position terrestre 2D de l'aéronef aux zones d'emploi de tous les couples de balises réalisables parmi les balises éligibles, sur la base d'une trajectoire prédictive de l'aéronef donnée.

Ce procédé permet de réaliser une sélection d'un couple de balises fournissant des mesures de distance qui permettent une estimation précise de la position terrestre 2D de l'aéronef tout en garantissant une stabilité de la sélection qui profite à la continuité de l'estimation. Dans certaines configurations de vol de l'aéronef, ce procédé conduit à réduire de trente pour cent les modifications de sélection du choix de balise par rapport à un procédé de l'état de la technique employant un critère de sélection fondé sur la recherche d'un maximum de précision de l'estimation de la position et un critère de modification de la sélection du couple de balise déclenchant une nouvelle sélection fondé sur un plancher de précision.

D'autres caractéristiques et avantages de l'invention apparaîtront à la lecture de la description détaillée qui suit et qui est faite en référence aux dessins annexés dans lesquels :

- la figure 1, déjà décrite, représente schématiquement le principe d'une estimation d'une position terrestre 2D d'un aéronef à partir de deux mesures de distances délivrées par un couple de balises de radionavigation ;
- la figure 2 représente un exemple de domaine d'emploi pour une balise placée sur la surface terrestre ;
- la figure 3 représente une zone d'emploi d'un couple de balise $(B_X, B_Y)$ et explicite des paramètres intervenant dans la mise en oeuvre d'un procédé de sélection d'un couple de balises selon l'invention;

Pour faciliter la lecture de la description, les mêmes repères désigneront les mêmes éléments dans les différentes figures.

La totalité des balises maillant la surface terrestre n'est pas utilisable à tout moment par un interrogateur placé sur un aéronef en vol.

Une première condition d'utilisation d'une balise est dictée par l'accessibilité « visuelle » de la balise à partir de l'aéronef à un instant $t_2$. Seule une balise située sous l'horizon, vu de l'aéronef, est considérée comme accessible. Cette sélection préliminaire est réalisée à partir de la connaissance d'une position de l'aéronef $A(t_1)$ issue d'une estimation à un instant $t_1$ antérieur à $t_2$ et des positions des balises qui sont stockées dans une base de données embarquée sur l'aéronef. Les positions des balises et de l'aéronef peuvent être exprimées, par exemple, sous la forme d'un doublet altitude, position terrestre 2D. L'altitude de l'aéronef, déterminée comme on l'a vu par un moyen distinct des équipements de mesure de distance, permet d'accéder à l'angle ($\psi_{HOR}$) entre un axe vertical $Z_A$ passant par la position de l'aéronef et la direction sous laquelle est vu l'horizon. On peut évaluer par ailleurs, une valeur de l'angle ($\psi_i$) séparant l'axe $Z_A$ et la direction d'une droite reliant la position de l'aéronef $A(t_1)$ à la position de la balise $B_i$ où i désigne un indice de balise. Lorsque la valeur de l'angle $\psi_i$ est inférieure à celle de l'angle $\psi_{HOR}$, la balise $B_i$ fait partie des balises accessibles. Une deuxième condition d'utilisation des balises peut être imposée par un pilote de l'aéronef qui peut exclure de la liste des balises accessibles une ou plusieurs balises de sa propre autorité.

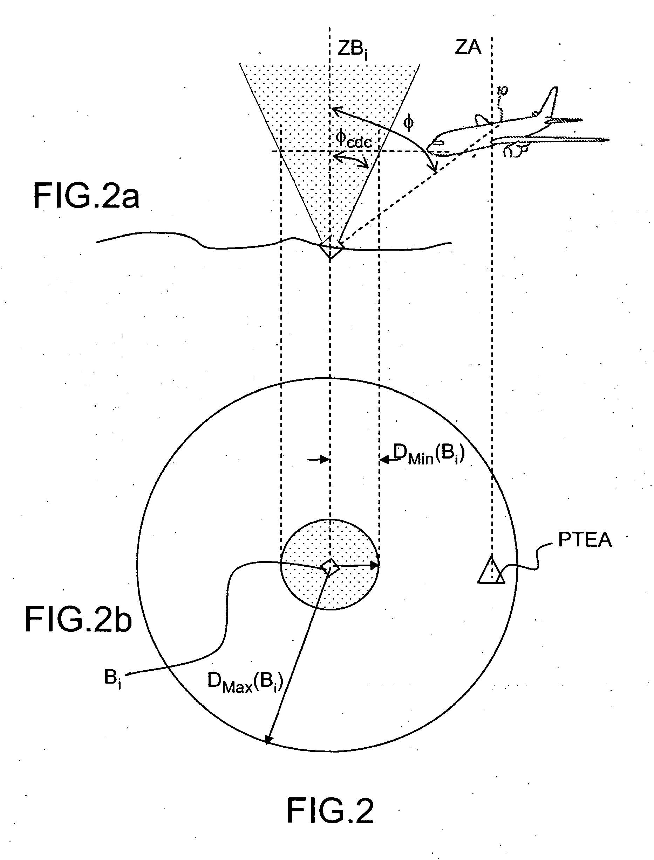

Par ailleurs, une balise de radionavigation disposée sur la surface terrestre possède un domaine d'emploi limité. Un premier type de limitation de son domaine d'emploi d'une balise concerne un défaut d'opérabilité de la balise lorsqu'un interrogateur est situé à proximité d'un axe vertical passant par la balise. Cette limitation, connue sous le nom de « cône de confusion », traduit le fait que les mesures de distance délivrées par une balise sont considérées comme inutilisables, parce qu'elles sont trop imprécises, lorsque l'interrogateur est proche de la verticale de la balise. La figure 2a illustre un exemple de forme d'un cône de confusion : la balise $B_i$ est utilisable par un interrogateur porté par un aéronef à la condition que la valeur .de l'angle formé par $ZB_i$ un axe vertical passant par la position de la, balise $B_i$ et un axe reliant la position de l'aéronef et la position de la balise $B_i$ est supérieur à un angle fixe $\phi_{cdc}$ pouvant être égal, par exemple, à $\pi/6$ radian. Cette même limitation exprimée cette fois en vue de dessus est illustrée par la figure 2b. En fonction de l'altitude H de l'aéronef, la balise est, par exemple, utilisable par un interrogateur uniquement à la condition que l'aéronef qui le porte a une position terrestre 2D située à l'extérieur d'un cercle centré sur la position de la balise $B_i$, de rayon $D_{Min}(B_i) = H \tan(\phi_{cdc})$. Les caractéristiques des cônes de confusions de toutes les balises sont, par exemple, stockées dans la base de données.

Un deuxième type de limitations du domaine d'emploi concerne des distances maximales au delà desquelles la balise $B_i$ n'est plus utilisable. Ces limitations sont d'ordre réglementaires, elles ont pour origine les caractéristiques techniques des balises, décrites par des paramètres de « Figure Of Merit » (FOM) et de classe, ou encore de sûreté de vol sous forme d'un indicateur « Required Navigation Performance » (RNP) dont la valeur est assignée par l'autorité de contrôle du trafic aérien au pilote. Les valeurs des paramètres des balises sont stockées dans la base de données. Ce type de limitations se traduit par une distance maximale $D_{Max}(B_i)$ au delà de laquelle un interrogateur ne peut plus utiliser la balise $B_i$. En général, on ne distingue pas les limitations d'emploi liées aux caractéristiques techniques d'une balise de celles liées à l'accessibilité « visuelle » de la balise pour assigner une valeur au paramètre $D_{Max}(B_i)$.

Avantageusement, une définition du domaine d'emploi d'une balise dépend des caractéristiques techniques de la balise et en ce que les caractéristiques techniques sont stockées dans une base de données équipant l'aéronef.

Avantageusement, la base de donnée répond à la norme ARINC 424.

Les limitations d'emploi des balises définissent un domaine d'emploi autour de la position de chaque balise. Le domaine d'emploi de chaque balise $B_i$ est, par exemple, une partie du sol délimitée par deux cercles de rayons $D_{Min}(B_i)$ et $D_{Max}(B_i)$. Si l'écart de distance séparant une position terrestre 2D d'un aéronef et une balise $B_i$ est inférieur à $D_{Max}(B_i)$ et supérieur à $D_{Min}(B_i)$, la balise $B_i$ peut délivrer des mesures de distance pouvant contribuer à l'estimation d'une positon terrestre 2D de l'aéronef, dans le cas contraire, la balise $B_i$ ne peut pas être utilisée par l'aéronef.

Avantageusement, la définition d'un domaine d'emploi d'une balise dépend d'une position d'aéronef.

Selon l'état de la technique, un procédé de sélection de balise, détermine, parmi les balises référencées dans la base de données embarquée sur l'aéronef, celles dont le domaine d'emploi contient la position terrestre 2D de l'aéronef: ce sont les balises éligibles.. Dans un deuxième temps, le procédé sélectionne, parmi les balises éligibles, un couple de balises ($B_X$, $B_Y$) dont les positions terrestres 2D minimisent un facteur de mérite $\sigma_{position}$. Le facteur de mérite $\sigma_{position}$ évalue la précision d'une estimation de position terrestre 2D d'un aéronef à partir de deux mesures de distance réalisées grâce à un couple de balises ($B_X$, $B_Y$) avec une précision $\sigma$ identique. On peut montrer que :

$$\sigma_{position} = \sigma \sqrt{\frac{2}{(\sin(\Delta\theta))^2}}$$ où $\Delta\theta$ est l'angle formé par les droites reliant la position terrestre 2D de l'aéronef et les positions terrestres 2D des balises $B_x$ et $B_y$. Ce critère de sélection vise à sélectionner un couple de balise uniquement sur la base de la précision avec laquelle l'estimation de position terrestre 2D s'effectue à un instant donné. Pratiquement, ce critère de sélection revient à sélectionner les balises $B_x$ et $B_y$ qui sont disposées de manière à ce que $\Delta\theta$ est le plus

proche de π/2 radian, car cette valeur de Δθ minimise la valeur de $\sigma_{position}$.

Lorsque une sélection d'un couple de balises est répétée entre des intervalles de temps réguliers, même lorsque la modification de la sélection est subordonnée à la satisfaction d'un critère de modification basé sur la valeur de la précision de l'estimation, elle peut conduire à des modifications relativement fréquentes du choix des balises sélectionnées. Ces modifications peuvent survenir, en particulier, dans le cas du survol d'une région du globe où la répartition des balises est relativement dense comme en Europe, aux Etats-Unis d'Amériques et dans certaines régions d'Asie. Ceci constitue un inconvénient en termes de disponibilité d'information. En effet, à l'initialisation des communications entre un interrogateur embarqué sur un aéronef et une balise, l'établissement des communications entre l'interrogateur et la balise prend une certaine durée. La mesure de distance entre l'aéronef et la balise n'est donc pas disponible immédiatement après une sélection d'un nouveau couple de balise. Si des modifications de sélection interviennent fréquemment, la durée de l'initialisation des communications peut devenir du même ordre que celle pendant laquelle une estimation de position terrestre 2D de l'aéronef est effectivement délivrée. Il apparaît donc le besoin de fonder un nouveau critère de sélection de balise qui prend en compte la stabilité temporelle de la sélection des balises et la privilégie.

Un nouveau critère peut s'exprimer au moyen d'une distance, séparant, à un moment donné, l'aéronef des frontières d'une zone d'emploi constituée par l'intersection des domaines d'emploi d'un couple de balises sélectionnées. Par « distance », on définit ici la valeur de la plus courte distance séparant la position terrestre 2D de l'aéronef d'un des points constituant la frontière de la zone d'emploi. En effet, quelques soient la trajectoire et la vitesse de l'aéronef, plus cette distance est grande et plus la durée pour que l'aéronef sorte, à vitesse prédéfinie, de la zone d'emploi est grande, et par conséquent moins il sera nécessaire de changer la sélection des balises.

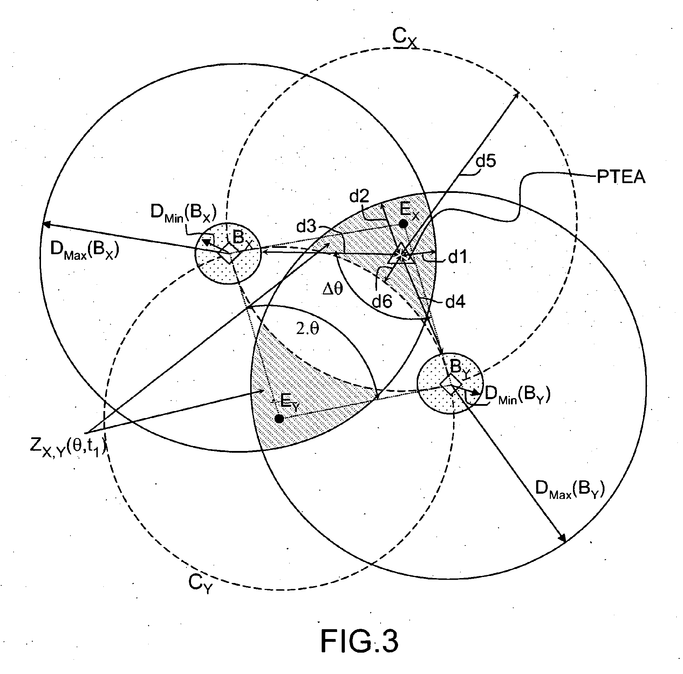

La figure 3 permet de représenter les grandeurs entrant en jeu dans un tel critère : la position terrestre 2D de l'aéronef 10 est représentée par un triangle, la position de deux balises $B_X$ et $B_Y$ est représentée par deux losanges. Autour de la position terrestre 2D de chaque balise, stockée dans la base de donnée embarquée sur l'aéronef, on délimite un domaine d'emploi, comme sur la figure 2, qui est délimité par deux cercles de rayon $D_{Min}(B_i)$ et $D_{Max}(B_i)$. Une zone d'emploi du couple de balises $(B_X, B_Y)$ est définie comme l'intersection des domaines d'emploi des balises $B_X$ et $B_Y$ sélectionnées par l'aéronef.

Si on ajoute un seuil de précision sur l'estimation d'une position terrestre 2D de l'aéronef, cela revient à souhaiter que l'angle Δθ sous lequel l'aéronef « voit » les balises $B_X$, $B_Y$, est supérieur à une valeur θ prédéfinie. On trace deux cercles $C_X$, $C_Y$, de centre $E_X$ et $E_Y$ interceptant $B_X$ et $B_Y$ tels que l'angle $(\overline{E_X B_X}, \overline{E_X B_Y})$ est égal à l'angle $(\overline{E_Y B_Y}, \overline{E_Y B_X})$ et vaut 2θ où θ est une valeur prédéfinie.

Dans ce cas, on restreint alors la zone d'emploi $Z_{X,Y}(\theta, t_1)$, à l'instant $t_1$, (zone hachurée sur la figure 3) au lieux des positions terrestres 2D d'un aéronef constitué par l'intersection des domaines d'emploi des balises sélectionnées et des lieux où la position terrestre 2D de l'aéronef correspond à Δθ>θ. Ainsi, lorsque l'aéronef a une position terrestre 2D appartenant à la zone d'emploi $Z_{X,Y}(\theta, t_1)$, la précision de l'estimation de sa position terrestre 2D réalisée grâce aux balises sélectionnées est inférieure à $\sigma \sqrt{\dfrac{2}{(\sin(\theta))^2}}$ où σ est la précision des mesure de distances conduisant à l'estimation de position terrestre 2D de l'aéronef.

Dans un premier mode de réalisation du procédé de sélection de balises, on peut considérer que le critère de sélection d'un couple de balises peut s'exprimer comme une sélection d'un couple de balises $(B_X, B_Y)$ en vue d'une maximisation de la durée nécessaire pour que l'aéronef sorte de la zone d'emploi $Z_{X,Y}(\theta, t_1)$, une vitesse de l'aéronef étant donnée. Ce critère peut également s'exprimer en termes de distance, dans ce cas on cherche à maximiser la distance séparant la position terrestre 2D de l'aéronef des frontières de la zone d'emploi $Z_{X,Y}(\theta, t_1)$.

Pour ce faire, on cherche à exprimer, à un instant $t_1$, $D_{X,Y}(\theta, t_1)$ la plus courte distance séparant la position terrestre 2D de l'aéronef $A(t_1)$ prise à l'instant $t_1$ des frontières de la zone d'emploi $Z_{X,Y}(\theta, t_1)$, θ étant fixé. Cette recherche est faite à partir de la connaissance de $A(t_1)$ et des positions terrestres 2D des balises stockées dans la base de données embarquée sur l'aéronef, elle est réalisée indépendamment des recherches faites à partir des positions passées et à venir de l'aéronef. A l'instant $t_1$, comme à chaque itération de la recherche, on définit une liste des balises éligibles et leur domaine d'emploi respectif, et on évalue pour chaque couple de balise $(B_X, B_Y)$ la distance $D_{X,Y}(\theta, t_1)$ suivant une trajectoire prédéfinie de l'aéronef, de manière à choisir le couple de balises $(B_X, B_Y)$ correspondant à une valeur de $D_{X,Y}(\theta, t_1)$ maximum. Ce mode de réalisation peut permettre de réduire très sensiblement (jusqu'à 30%), le nombre de couples balises différentes sélectionnées pour une trajectoire de l'aéronef donnée par rapport à un procédé de l'état de la technique.

On propose ci-dessous une méthode pour estimer rapidement la valeur de $D_{X,Y}(\theta, t_1)$.

On définit par $r_i(t)$ la distance, le long de la surface terrestre, séparant la position terrestre 2D de la balise $B_i$ et la position terrestre 2D d'un, aéronef $A(t)$, à l'instant t. $r_i(t)$ est une distance estimée à partir de la connaissance de $A(t)$ et des positions terrestres 2D de balises, elle est calculée selon un modèle terrestre, par exemple, le modèle terrestre WGS4. Enfin, on définit par $dist_{X,Y}(\alpha, \theta, t)$ la fonction qui associe à un couple de balise $(B_X, B_Y)$, une position terrestre 2D de l'aéronef à l'instant t, et un angle $\alpha$, une distance telle que :

$$\frac{\sqrt{r_X(t)^2 + r_Y(t)^2 - 2.r_X(t).r_Y(t).\cos(|\Delta\theta| + \alpha)}}{2.\sin(\theta)}$$

où $\Delta\theta$ est l'angle formé par des axes reliant la position terrestre 2D de l'aéronef et la position terrestre 2D des balises $B_X$ et $B_Y$ et où $\theta$ est une valeur minimum souhaitée pour $\Delta\theta$.

A partir de ces définitions, on peut introduire six fonctions permettant de définir $D_{X,Y}(t, \theta)$ la distance séparant la position de l'aéronef à l'instant t, des frontières de la zone d'emploi des balises $B_X$, $B_Y$ dont une illustration est présentée sur la figure 3.

$$d1_X(t) = D_{Max}(B_X) - r_X(t)$$

$$d2_Y(t) = D_{Max}(B_Y) - r_Y(t)$$

$$d3_X(t) = r_X(t) - D_{Min}(B_X)$$

$$d4_Y(t) = r_Y(t) - D_{Min}(B_Y)$$

$$d5_{X,Y}(\theta, t) = dist_{X,Y}(2\theta, \theta, t) - dist_{X,Y}(0, \theta, t)$$

$$d6_{X,Y}(\theta, t) = dist_{X,Y}(0, \theta, t) - dist_{X,Y}(-2\theta, \theta, t)$$

On peut considérer, par exemple, que à l'instant $t_1$, la distance minimum $D_{X,Y}(\theta, t_1)$ séparant la position de l'aéronef des frontières de la zone d'emploi $Z_{X,Y}(\theta, t_1)$ peut être définie comme la valeur minimum de $(d1_X(t_1), d2_Y(t_1), d3_X(t_1), d4_Y(t_1), d5_{X,Y}(0,tri), d6_{X,Y}(\theta, t_1))$.

Ce premier mode de réalisation peut être présenté sous la forme d'une deuxième approche dans laquelle la trajectoire prédéfinie consiste en un mouvement rectiligne de vitesse V non nulle prédéfinie, à partir de la position terrestre 2D $A(t_1)$ prise par l'aéronef à la date $t_1$ vers une position d'un point B appartenant à la frontière de la zone d'emploi $Z_{X,Y}(\theta, t_1)$, la position du point B sur la frontière minimisant la distance séparant $A(t_1)$ et des positions des points de la frontière de la zone d'emploi $Z_{X,Y}(\theta, t_1)$.

Dans un deuxième mode de réalisation du procédé de sélection de balises, la sélection du couple de balises est réalisée à partir d'hypothèses sur la position terrestre 2D prise par l'aéronef dans les instants suivant $t_1$. Ce mode de réalisation conduit à évaluer, pour chaque zone d'emploi possibles, définie par un couple de balises parmi les balises éligibles et une valeur d'un angle $\theta$, la durée pour que la position terrestre 2D de l'aéronef sorte de la zone d'emploi du couple de balises sélectionnées considérée. Différentes hypothèses sur la trajectoire prédéfinie de l'aéronef peuvent être envisagées :

Avantageusement, la trajectoire prédéfinie consiste à prolonger le mouvement de l'aéronef à l'instant $t_1$ par un mouvement rectiligne uniforme.

Avantageusement, la trajectoire prédéfinie est déterminée à partir de données figurant dans un plan de vol embarqué sur l'aéronef.

Les deux modes de réalisation du procédé permettent d'évaluer, pour chaque couple de balises, la durée à l'issue de laquelle la position terrestre 2D de l'aéronef sort de la zone d'emploi du couple de balises sélectionnée. Le critère de sélection vise à sélectionner le couple de balise correspondant à la durée d'appartenance à la zone d'emploi qui a la valeur maximum.

Avantageusement; le procédé selon l'invention comporte une étape de sélection d'un couple de balises suivant le critère de sélection.

Pour limiter encore les modifications de sélection de balises, on peut de plus, élaborer un critère de modification de la sélection courante du couple de balises sélectionnées. Ce critère étant appliqué au préalable de chaque lancement d'une opération de sélection de balises.

Ce critère de modification peut par exemple se fonder sur une comparaison de la distance $D_{X,Y}(\theta, t_1)$ séparant la position terrestre 2D de l'aéronef $A(t_1)$ à l'instant $t_1$ de la zone d'emploi $Z_{X,Y}(\theta, t_1)$ définie par le couple de balise $(B_X, B_Y)$ sélectionnées, pour une valeur de $\theta$ prédéfinie, avec les distances séparant la position 2D terrestre de l'aéronef $A(t_1)$ de toutes les zones d'emploi possibles définies à partir des couples de balises éligibles, pour une valeur de l'angle $\theta$ constante, à l'instant $t_1$.

Afin que le critère de modification de sélection de balises soit homogène avec le critère de sélection de balises, on peut également l'exprimer en employant des durées plutôt que des distances.

Ainsi, on peut définir $T_{X,Y}(\theta, t_1)$ une durée d'appartenance de la position terrestre 2D de l'aéronef à la zone d'emploi $Z_{X,Y}(\theta, t_1)$, à partir de la position terrestre 2D que l'aéronef occupe à $t_1$, lorsque l'aéronef suit la trajectoire prédictive de l'aéronef donnée.

Avantageusement, le procédé selon l'invention comporte une étape pour élaborer un critère de modification de la sélection du couple de balises $(B_X, B_Y)$, et en ce que le critère de modification est fondé sur une comparaison de la valeur de $T(t_1)$ et du produit $k.T_{X,Y}(\theta, t_1)$, lorsque $T(t_1)$ est la durée maximum d'appartenance aux zones d'emploi de tous couples possibles parmi les balises éligibles hors le couple $(B_X, B_Y)$, à partir de la position terrestre 2D de l'aéronef à l'instant $t_1$, en suivant la trajectoire prédictive de l'aéronef, et $k$ est un paramètre dont la valeur est prédéfinie.

Avantageusement, le procédé selon l'invention comporte:

- une étape pour évaluer, suivant le critère de modification, la modification du couple de balises $(B_X, B_Y)$;
- lorsque la valeur de $k.T_{X,Y}(\theta, t_1)$ est inférieure à la valeur de $T(t_1)$, une étape pour réaliser une nouvelle sélection d'un couple de balise suivant le critère de sélection.

Le procédé selon l'invention met en ouvre deux paramètres $(\theta, k)$ dont les valeurs sont prédéfinies et permettent d'ajuster le fonctionnement dynamique du procédé en privilégiant la précision de l'estimation (valeur de $\theta$ proche de $\pi/2$ radian) ou bien la stabilité de la sélection des balises (valeurs de $k$ proches de 0). Un exemple de valeurs assignées aux paramètres est par exemple $(\theta, k) = (\pi/4, 150\%)$.

Cependant, il est envisageable que les valeurs assignées aux paramètres $(\theta, k)$ soient fixés dynamiquement en fonction d'éléments liés aux conditions.

Avantageusement, les valeurs de $k$ et de $\theta$ sont adaptées, dans le temps, en fonction des phases de vol de l'aéronef.

Avantageusement, les valeurs de $k$ et de $\theta$ sont adaptées, dans le temps, en fonction de la valeur du « Required Navigation Performance » (RNP) de la trajectoire suivie par l'aéronef.

## Revendications

1. Procédé de sélection de balises de radionavigation par un système de navigation embarqué à bord d'un aéronef dans une liste de balises éligibles $(B_1, ...., B_n)$ à un instant $t_2$, une position $A(t_1)$ prise par l'aéronef dans un repère lié à la Terre à un instant $t_1$ antérieur à $t_2$ étant connue, une projection de la position de l'aéronef sur le globe terrestre 2D suivant la verticale à l'aéronef étant dénommée position terrestre 2D de l'aéronef, les balises éligibles étant disposée sur la surface terrestre en des positions connues qui sont stockées dans une base de données équipant l'aéronef, un domaine d'emploi d'une balise éligible $B_i$ définissant un ensemble de positions terrestres 2D de l'aéronef correspondant à des positions de l'aéronef pour lesquelles une mesure de distance séparant l'aéronef et la balise $B_i$ est pertinente, le procédé comporte une étape pour élaborer un critère de sélection d'un couple de balises $(B_X, B_Y)$ parmi les balises faisant partie de la liste des balises éligible

caractrisé en ce que le critère de sélection est fondé sur une recherche d'une durée maximum d'appartenance, pour des instants ultérieurs à l'instant $t_1$, de la position terrestre 2D de l'aéronef aux zones d'emploi de tous les couples de balises réalisables parmi les balises éligibles, sur la base d'une trajectoire prédictive de l'aéronef donné, une zone d'emploi $Z_{X,Y}(\theta, t_1)$ d'un couple de balises éligibles $(B_X, B_Y)$ étant définie par une intersection entre les domaines d'emploi des balises $B_X$ et $B_Y$ et un lieu géométrique regroupant des positions terrestres 2D de l'aéronef pour lesquelles un angle formé par des axes reliant la position terrestre 2D de l'aéronef et les positions des balises $B_X$ et $B_Y$ est supérieur à une valeur $\theta$ prédéfinie, la zone d'emploi $Z_{X,Y}(\theta, t_1)$ étant délimitée par une frontière,

2. Procédé de sélection de balises selon la revendication 1 **caractérisé en ce qu'**il comporte une étape de sélection d'un couple de balises suivant le critère de sélection.

3. Procédé de sélection de balises selon la revendication 1, une position terrestre 2D de l'aéronef à l'instant $t_1$ étant connue, un couple de balises $(B_X, B_Y)$ étant sélectionné, à l'instant $t_1$, une zone d'emploi $Z_{X,Y}(\theta, t_1)$ étant définie par le couple de balises sélectionnées $(B_X, B_Y)$ et une valeur $\theta$ prédéfinie, une durée d'appartenance $T_{X,Y}(\theta, t_1)$ de l'aéronef à la zone d'emploi $Z_{X,Y}(\theta, t_1)$, à partir de la position en suivant la trajectoire prédictive de l'aéronef, **caractérisé en ce qu'**il comporte une étape pour élaborer un critère de modification de la sélection du couple de balises $(B_X, B_Y)$, et **en ce que** le critère de modification est fondé sur une comparaison de la valeur de $T(t_1)$ et du produit $k.T_{X,Y}(\theta, t_1)$, lorsque $T(t_1)$ est la durée maximum d'appartenance aux zones d'emploi de tous couples possibles parmi les balises éligibles hors le couple $(B_X, B_Y)$, à partir de la position terrestre 2D de l'aéronef à l'instant $t_1$, en suivant la trajectoire prédictive de l'aéronef, et k est un paramètre dont la valeur est prédéfinie.

4. Procédé de sélection de balises selon la revendication 3 **caractérisé en ce qu'** il comporte :

   - une étape pour évaluer, suivant le critère de modification, la modification du couple de balises $(B_X, B_Y)$;
   - lorsque la valeur de $k.T_{X,Y}(\theta, t_1)$ est inférieure à la valeur de $T(t_1)$, une étape pour réaliser une nouvelle sélection d'un couple de balise suivant le critère de sélection.

5. Procédé de sélection de balises selon l'une des revendications précédentes **caractérisé en ce que** la trajectoire prédéfinie consiste à prolonger le mouvement de l'aéronef à l'instant $t_1$ par un mouvement rectiligne uniforme.

6. Procédé de sélection de balises selon l'une des revendications précédentes **caractérisé en ce que** la trajectoire prédéfinie est déterminée à partir de données figurant dans un plan de vol embarqué sur l'aéronef.

7. Procédé de sélection de balises selon l'une des revendications précédentes **caractérisé en ce que** la trajectoire prédéfinie consiste en un mouvement rectiligne de vitesse V non nulle prédéfinie, à partir de la position terrestre 2D $A(t_1)$ prise par l'aéronef à la date $t_1$ vers une position d'un point B appartenant à la frontière de la zone d'emploi $Z_{X,Y}(\theta, t_1)$, la position du point B sur la frontière minimisant la distance séparant $A(t_1)$ et des positions des points de la frontière de la zone d'emploi $Z_{X,Y}(\theta, t_1)$.

8. Procédé de sélection de balises selon l'une des revendications précédentes **caractérisé en ce qu'**une définition d'un domaine d'emploi d'une balise dépend d'une position d'aéronef.

9. Procédé de sélection de balises selon l'une des revendications précédentes **caractérisé en ce que** la définition du domaine d'emploi d'une balise dépend des caractéristiques techniques de la balise et **en ce que** les caractéristiques techniques sont stockées dans la base de données.

10. Procédé de sélection de balises selon la revendication précédente **caractérisé en ce que** la base de donnée répond à la norme ARINC 424.

11. Procédé de sélection de balises selon la revendication précédente **caractérisé en ce que** les valeurs de k et de $\theta$ sont adaptées, dans le temps, en fonction des phases de vol de l'aéronef.

12. Procédé de sélection de balise selon la revendication précédente **caractérisé en ce que** les valeurs de k et de $\theta$ sont adaptées, dans le temps, en fonction de la valeur du « Required Navigation Performance » (RNP) de la trajectoire suivie par de l'aéronef.

**Claims**

1. Method for selecting radionavigation beacons using an onboard navigation system aboard an aircraft from a list of eligible beacons $(B_1, .... , B_n)$ at an instant $t_2$, a position $A(t_1)$ taken by the aircraft in a reference frame tied to the Earth at an instant $t_1$ prior to $t_2$ being known, a projection of the position of the aircraft onto the 2D terrestrial globe according to the vertical to the aircraft being dubbed the 2D terrestrial position of the aircraft, the eligible beacons being arranged on the terrestrial surface at known positions which are stored in a database with which the aircraft is equipped, a domain of employment of an eligible beacon $B_i$ defining a set of 2D terrestrial positions of the aircraft corresponding to positions of the aircraft for which a distance measurement separating the aircraft and the beacon $B_i$ is relevant, the method comprises a step for formulating a criterion for selecting a pair of beacons $(B_X, B_Y)$ from among the beacons forming part of the list of eligible beacons,

**characterized in that** the selection criterion is based on a search for a maximum duration of membership, for instants subsequent to the instant $t_1$, for which the 2D terrestrial position of the aircraft belongs to the zones of employment of all the pairs of beacons achievable from among the eligible beacons, on the basis of a given predictive trajectory of the aircraft, an employment zone $Z_{X,Y}(\theta, t_1)$ of a pair of eligible beacons $(B_X, B_Y)$ being defined by an intersection between the employment domains of the beacons $B_X$ and $B_Y$ and a geometric locus that groups together 2D terrestrial positions of the aircraft for which an angle formed by axes connecting the 2D terrestrial position of the aircraft and the positions of the beacons $B_X$ and $B_Y$ is greater than a predefined value $\theta$, the employment zone $Z_{X,Y}(\theta, t_1)$ being delimited by a boundary.

2. Method for selecting beacons according to Claim 1, **characterized in that** it comprises a step for selecting a pair of beacons according to the selection criterion.

3. Method for selecting beacons according to Claim 1, a 2D terrestrial position of the aircraft at the instant $t_1$ being known, a pair of beacons $(B_X, B_Y)$ being selected, at the instant $t_1$, an employment zone $Z_{X,Y}(\theta, t_1)$ being defined by the pair of selected beacons $(B_X, B_Y)$ and a value $\theta$ predefined, a duration of membership $T_{X,Y}(\theta, t_1)$ of the aircraft in the employment zone $Z_{X,Y}(\theta, t_1)$, on the basis of the position by following the predictive trajectory of the aircraft, **characterized in that** it comprises a step for formulating a criterion for modifying the selection of the pair of beacons $(B_X, B_Y)$, and **in that** the modification criterion is based on a comparison of the value of $T(t_1)$ and of the product $k.T_{X,Y}(\theta, t_1)$, when $T(t_1)$ is the maximum duration of membership in the zones of employment of all possible pairs from among the eligible beacons except for the pair $(B_X, B_Y)$, on the basis of the 2D terrestrial position of the aircraft at the instant $t_1$, by following the predictive trajectory of the aircraft, and k is a parameter whose value is predefined.

4. Method for selecting beacons according to Claim 3, **characterized in that** it comprises:

   - a step for evaluating, according to the modification criterion, the modification of the pair of beacons $(B_X, B_Y)$ ;
   - when the value of $k.T_{X,Y}(\theta, t_1)$ is less than the value of $T(t_1)$, a step for making a new selection of a beacon pair according to the selection criterion.

5. Method for selecting beacons according to one of the preceding claims, **characterized in that** the predefined trajectory consists in prolonging the motion of the aircraft at the instant $t_1$ by a uniform rectilinear motion.

6. Method for selecting beacons according to one of the preceding claims, **characterized in that** the predefined trajectory is determined on the basis of data featuring in a flight plan onboard the aircraft.

7. Method for selecting beacons according to one of the preceding claims, **characterized in that** the predefined trajectory consists of a rectilinear motion of predefined nonzero speed V, from the 2D terrestrial position $A(t_1)$ taken by the aircraft at the date $t_1$ to a position of a point B belonging to the boundary of the employment zone $Z_{X,Y}(\theta, t_1)$, the position of the point B on the boundary minimizing the distance separating $A(t_1)$ and positions of the points of the boundary of the employment zone $Z_{X,Y}(\theta, t_1)$.

8. Method for selecting beacons according to one of the preceding claims, **characterized in that** a definition of a domain of employment of a beacon depends on an aircraft position.

9. Method for selecting beacons according to one of the preceding claims, **characterized in that** the definition of the domain of employment of a beacon depends on the technical characteristics of the beacon and **in that** the technical characteristics are stored in the database.

10. Method for selecting beacons according to the preceding claim, **characterized in that** the database meets the ARINC 424 standard.

11. Method for selecting beacons according to the preceding claim, **characterized in that** the values of k and of $\theta$ are adapted, over time, as a function of the flight phases of the aircraft.

12. Method for selecting a beacon according to the preceding claim, **characterized in that** the values of k and of $\theta$ are adapted, over time, as a function of the value of the "Required Navigation Performance" (RNP) of the trajectory followed by the aircraft.

**Patentansprüche**

1. Verfahren zur Auswahl von Funknavigationsbaken durch ein an Bord eines Luftfahrzeugs befindliches Navigationssystem aus einer Liste von wählbaren Baken ($B_1$, ..., $B_n$) in einem Zeitpunkt $t_2$, wobei eine Position $A(t_1)$, die von dem Luftfahrzeug in einem mit der Erde verbundenen Bezugssystem in einem Zeitpunkt $t_1$ vor $t_2$ eingenommen wird, bekannt ist, wobei eine Projektion der Position des Luftfahrzeugs auf die Erdkugel 2D gemäß der Senkrechten zum Luftfahrzeug als terrestrische Position 2D des Luftfahrzeugs bezeichnen wird, wobei die wählbaren Baken auf der Erdoberfläche in bekannten Positionen angeordnet sind, die in einer zur Ausstattung des Luftfahrzeugs gehörenden Datenbank gespeichert sind, wobei ein Anwendungsbereich einer wählbaren Bake $B_i$ eine Gruppe von terrestrischen Positionen 2D des Luftfahrzeugs definiert, die Positionen des Luftfahrzeugs entsprechen, in denen eine Messung der das Luftfahrzeug und die Bake $B_i$ trennenden Entfernung zutreffend ist, wobei das Verfahren einen Schritt aufweist, um ein Auswahlkriterium eines Paars von Baken ($B_x$, $B_y$) unter den Baken zu erarbeiten, die Teil der Liste der wählbaren Baken sind, **dadurch gekennzeichnet, dass** das Auswahlkriterium auf einer Suche nach einer maximalen Zugehörigkeitsdauer, für zeitpunkte nach dem Zeitpunkt $t_1$, der terrestrischen Position 2D des Luftfahrzeugs zu den Anwendungszonen aller Bakenpaare beruht, die unter den wählbaren Baken herstellbar sand, auf der Basis einer gegebenen prädiktiven Flugbahn des Luftfahrzeugs, wobei eine Anwendungszone $Z_{x,y}(\theta, t_1)$ eines Paars von wählbaren Baken ($B_x$, $B_y$) durch eine Schnittlinie zwischen den Anwendungsgebieten der Baken $B_x$ und $B_y$ und einen geometrischen Ort definiert wird, der terrestrische Positionen 2D des Luftfahrzeugs zusammenfasst, für die ein Winkel, der von Achsen gebildet wird, die die terrestrische Position 2D des Luftfahrzeugs und die Positionen der Baken $B_x$ und $B_y$ verbinden, größer ist als ein vordefinierten Wert $\theta$, wobei die Anwendungszone $Z_{x,y}(\theta, t_1)$ von einer Grenze eingegrenzt wird.

2. Verfahren zur Auswahl von Baken nach Anspruch 1, **dadurch gekennzeichnet, dass** es einen Schritt der Auswahl eines Paars von Baken gemäß dem Auswahlkriterium aufweist.

3. Verfahren zur Auswahl von Baken nach Anspruch 1, wobei eine terrestrische Position 2D des Luftfahrzeugs im Zeitpunkt $t_1$ bekannt ist, wobei ein Paar von Baken ($B_x$, $B_y$) im Zeitpunkt $t_1$ ausgewählt wird, wobei eine Anwendungszone $z_{x,y}(\theta, t_1)$ von dem Paar von ausgewählten Baken ($B_x$, $B_y$) und einem vordefinierten Wert $\theta$, einer Zugehörigkeitsdauer $T_{x,y}(\theta, t_1)$ des Luftfahrzeugs zu der Anwendungszone $Z_{x,y}(\theta, t_1)$, ausgehend von der Position unter Verfolgung der prädiktiven Flugbahn des Luftfahrzeugs definiert wird, **dadurch gekennzeichnet, dass** es einen Schritt aufweist, um ein Änderungskriterium der Auswahl des Paars von Baken ($B_x$, $B_y$) zu verarbeiten, und dass das Änderungskriterium auf einem Vergleich des Werts von $T(t_1)$ mit dem Produkt $k.T_{x,y}(\theta, t_1)$ beruht, wenn $T(t_1)$ die maximale Zugehörigkeitsdauer zu den Anwendungszonen aller möglichen Paare unter den wählbaren Baken außer dem Paar $B_x$, $B_y$) ist, ausgehend von der terrestrischen Position 2D des Luftfahrzeugs im Zeitpunkt $t_1$, unter Verfolgung der prädiktiven Flugbahn des Luftfahrzeugs, und $k$ ein Parameter ist, dessen Wert vordefiniert ist.

4. Verfahren zur Auswahl von Baken nach Anspruch 3, **dadurch gekennzeichnet, dass** es aufweist:

   - einen Schritt, um gemäß dem Änderungskriterium die Änderung des Paars von Baken ($B_x$, $B_y$) zu ermitteln;
   - wenn der Wert von $k.T_{x,y}(\theta, t_1)$ geringer als der Wert von $T(t_1)$ ist, einen Schritt, um eine neue Auswahl eines Bakenpaars gemäß dem Auswahlkriterium durchzuführen.

5. Verfahren zur Auswahl von Baken nach einem der vorhergehenden Ansprüche, **dadurch gekennzeichnet, dass** die vordefinierten Flugbahn darin besteht, die Bewegung des Luftfahrzeugs im Zeitpunkt $t_1$ durch eine gleichmäßige geradlinige Bewegung zu verlängern.

6. Verfahren zur Auswahl von Baken nach einem der vorhergehenden Ansprüche, **dadurch gekennzeichnet, dass** die vordefinierte Flugbahn ausgehend von Daten bestimmt wird, die sich in einem an Bord des Luftfahrzeugs befindlichen Flugplan befinden.

7. Verfahren zur Auswahl von Baken nach einem der vorhergehenden Ansprüche, **dadurch gekennzeichnet, dass** die vordefinierte Flugbahn aus einer geradlinigen Bewegung mit einer vordefinierten Geschwindigkeit V ungleich Null ausgehend von der terrestrischen Position 2D $A(t_1)$, die das Luftfahrzeug im Datum $t_1$ einnimmt, zu einer Position eines Punkts B, der zur Grenze der der Anwendungszone $Z_{x,y}(\theta, t_1)$ gehört, besteht, wobei die Position des Punkts B auf der Grenze die Entfernung minimiert, die $A(t_1)$ und Positionen der Punkte der Grenze der Anwendungszone $Z_{x,y}(\theta, t_1)$ trennt.

8. Verfahren zur Auswahl von Balken nach einem der vorhergehenden Ansprüche, **dadurch gekennzeichnet, dass** eine Definition eines Anwendungsbereichs einer Bake von einer Position des Luftfahrzeugs abhängt.

9.  Verfahren zur Auswahl von Baken nach einem der vorhergehenden Ansprüche, **dadurch gekennzeichnet, dass** die Definition des Anwendungsbereichs einer Bake von den technischen Merkmale der Bake abhängt, und dass die technischen Merkmale in der Datenbasis gespeichert sind.

10. Verfahren zur Auswahl von Baken nach dem vorhergehenden Anspruch, **dadurch gekennzeichnet, dass** die Datenbank der Norm ARINC 424 entspricht.

11. Verfahren zur Auswahl von Balken nach dem vorhergehenden Anspruch, **dadurch gekennzeichnet, dass** die Werte von k und von θ zeitlich in Abhängigkeit von den Flugphasen des Luftfahrzeugs angepasst werden.

12. Verfahren zur Auswahl von Baken nach dem vorhergehenden Anspruch, **dadurch gekennzeichnet, dass** die Werte von k und von θ zeitlich in Abhängigkeit vom Wert der "Required Navigation Performance" (RNP) der vom Luftfahrzeug verfolgten Flugbahn angepasst werden.

dlm$_Y$

B$_Y$

PTEA

$\Delta\theta$

dlm$_X$

B$_X$

FIG.1

FIG.2a

ZB$_i$

ZA

$\phi$

$\phi_{cdc}$

FIG.2b

D$_{Min}$(B$_i$)

PTEA

B$_i$

D$_{Max}$(B$_i$)

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Ruhnow et al.** VOR/DME Automated Station Selection Algorithm. *Journal of the Institute of Navigation,* 1982, vol. 29 (4